# FASCICULE DE BREVET EUROPEEN

(11) **EP 4 046 876 B1**
(45) Date de publication et mention de la délivrance du brevet: **20.11.2024**
(21) Numéro de dépôt: 22157263.9
(22) Date de dépôt: 17.02.2022
(51) Int. Cl.: B60R 16/02

(54) **DISPOSITIF ACOUSTIQUE DE TRAVERSÉE DE CLOISON AMÉLIORÉ**
AKUSTISCHE VORRICHTUNG ZUR WANDDURCHFÜHRUNG
ACCOUSTIC GROMMET

(30) Priorité: 22.02.2021 FR 2101701
(43) Date de publication de la demande: 24.08.2022
(73) Titulaire: Leoni Wiring Systems France, 78180 Montigny le Bretonneux (FR)
(72) Inventeur: MATHEY, Jean-Marc, 92380 GARCHES (FR)
(74) Mandataire: LLR

(56) Documents cités:
- EP-A1- 1 717 502
- EP-A1- 2 246 950
- WO-A1-2015/145003
- FR-A1- 2 809 877
- FR-A1- 2 826 091
- FR-A1- 2 878 601

## Description

L'invention concerne le domaine du guidage de faisceaux de conducteurs électriques dans un véhicule automobile.

Elle concerne plus particulièrement une bague de traversée, par un faisceau de conducteurs, d'une cloison d'un véhicule automobile.

Dans un véhicule automobile, il convient fréquemment de raccorder entre eux différents organes électriques agencés respectivement dans l'habitacle et dans le compartiment moteur. Ces organes électriques sont le plus souvent raccordés par des faisceaux de conducteurs qui doivent ainsi traverser la cloison séparant l'habitacle du compartiment moteur.

A cet effet, on fait passer ces faisceaux de conducteurs à travers le canal d'une bague de traversée de cloison qui est destinée à être insérée dans un orifice pratiqué dans la cloison séparant l'habitacle du compartiment moteur.

Une bague de traversée de cloison est généralement conçue de manière à limiter la transmission du bruit en provenance du compartiment moteur vers l'habitacle.

On connaît du document FR 1 650 556 une bague de traversée de cloison comprenant un corps comportant un canal traversant le corps pour l'insertion d'un faisceau de conducteurs, une première partie formant une lèvre élastiquement déformable, et une deuxième partie portant des moyens d'appui destinés à coopérer avec un bord de l'orifice, le corps se fixant sur la cloison par pincement du bord de la cloison délimitant l'orifice entre la lèvre acoustique et les moyens d'appui. La deuxième partie du corps est délimitée par une surface latérale externe jointive avec une surface axiale de la deuxième partie du corps qui est en regard de la lèvre acoustique, de façon à délimiter entre cette surface axiale et cette lèvre acoustique un premier volume de logement d'une masse d'isolation phonique.

Bien que cette bague de traversée de cloison offre de bonnes performances d'isolation phonique tout en étant peu onéreuse à fabriquer, elle présente l'inconvénient d'être sujette à des déformations importantes une fois mise en place dans l'orifice de la cloison du véhicule, en particulier lorsqu'elle est réalisée en matériau élastomère ou à base de caoutchouc.

L'invention a notamment pour but de fournir un dispositif acoustique de traversée de cloison qui soit plus résistant mécaniquement, et qui conserve ainsi de bonnes performances d'isolation phonique malgré les contraintes subies par la bague de traversée de cloison.

A cet effet, l'invention concerne un dispositif acoustique de traversée de cloison destinée à être montée dans un orifice aménagé dans une cloison d'un véhicule automobile séparant un compartiment moteur du véhicule d'un habitacle du véhicule, comprenant une bague de traversée de cloison comportant un corps comprenant :
- un canal traversant le corps pour l'insertion d'un faisceau de conducteurs,
- une première partie formant une lèvre élastiquement déformable, dite lèvre acoustique, et
- une deuxième partie portant des moyens d'appui destinés à coopérer avec un bord de la cloison délimitant l'orifice de la cloison,

le corps se fixant sur la cloison par pincement du bord de la cloison délimitant l'orifice de la cloison entre la lèvre acoustique et les moyens d'appui,
la deuxième partie du corps étant délimitée par une surface latérale externe jointive avec une surface axiale de la deuxième partie du corps qui est en regard de la lèvre acoustique, de façon à délimiter entre cette surface axiale et cette lèvre acoustique un premier volume de logement d'une masse d'isolation phonique,
**caractérisée en ce qu'il** comprend en outre une rondelle mécano-acoustique comprenant :
   - une jupe de renfort insérée dans une gorge d'ancrage ménagée dans la deuxième partie en entourant le canal et
   - une collerette acoustique fermant la gorge d'ancrage et créant un volume de logement d'une masse d'isolation phonique entre le corps et la rondelle mécano-acoustique.

Grâce à la présence de la rondelle mécano-acoustique, et en particulier de la jupe de renfort insérée dans une gorge d'ancrage ménagée à cet effet dans la deuxième partie de la bague de traversée de cloison, la bague de traversée de cloison est rigidifiée et peut donc être réalisée en matériau élastomère ou à base de caoutchouc sans risquer qu'elle ne subisse des déformations importantes après installation dans l'orifice de la cloison du véhicule.

De plus, grâce à la collerette acoustique venant fermer la gorge d'ancrage, et créant un volume de logement d'une masse d'isolant phonique entre le corps et la rondelle mécano-acoustique, on améliore les performances d'isolation phonique du dispositif acoustique de traversée de cloison.

Selon un mode de réalisation préféré de l'invention, la rondelle mécano-acoustique est réalisée en deux parties assemblées par des moyens d'assemblage, par exemple des moyens d'encliquetage portés par chacune les deux parties. Ceci permet de grandement faciliter le montage du dispositif acoustique de traversée de cloison, car il n'est dès lors pas nécessaire d'enfiler le faisceau de câbles dans la rondelle mécano-acoustique, mais seulement de rassembler ses deux parties autour du faisceau. Cette configuration est d'autant plus avantageuse lorsque le faisceau présente des variations de section le long de son axe, ou présente des coudes. De préférence, afin d'assurer un bon contact entre la cloison et la bague, les moyens d'appui sont une lèvre d'appui radiale portée par la deuxième partie du corps.

Afin d'obtenir une meilleure résistance mécanique de la bague, la collerette acoustique épouse au moins partiellement la lèvre d'appui.

Selon un mode de réalisation préféré de l'invention, la première partie et la deuxième partie du corps sont reliées par une partie tubulaire délimitant le canal.

Selon un mode de réalisation préféré de l'invention, la gorge d'ancrage est délimitée par une première paroi et une deuxième paroi, la première paroi étant un prolongement de la partie tubulaire.

Afin d'améliorer les performances d'isolation phonique du dispositif, le canal relie une première ouverture pratiquée dans la lèvre acoustique à une deuxième ouverture pratiquée dans la deuxième partie, la section de la partie tubulaire étant supérieure à celles de la première et de la deuxième ouverture de sorte que la partie tubulaire délimite un deuxième volume de logement d'une masse d'isolation phonique. Il permet également de s'adapter aux différentes tailles et géométries de faisceaux insérés dans le canal du corps de la bague.

De manière à faciliter la déformation radiale de la bague et ainsi, le canal relie une première ouverture pratiquée dans la lèvre acoustique à une deuxième ouverture pratiquée dans la deuxième partie, et la deuxième ouverture est pratiquée dans une paroi de la partie tubulaire formant un soufflet déformable. Ainsi, une extrémité du canal est suffisamment souple pour s'adapter à un éventuel pliage ou coude du faisceau de câbles, ce qui permet de minimiser les contraintes sur la bague due à la configuration du faisceau.

Selon un mode de réalisation préféré de l'invention, la jupe de renfort est cylindrique de révolution.

De manière à améliorer la résistance mécanique de la rondelle mécano-acoustique et donc du dispositif, la jupe de renfort comprend une pluralité de nervures de renfort.

Selon un mode de réalisation préféré de l'invention, les nervures de renfort font saillie à partir d'une surface externe de la jupe de renfort, par exemple localement de façon normale par rapport à la surface externe.

Pour favoriser la solidarisation entre la rondelle mécano-acoustique et la bague et donc le transfert d'efforts entre ces deux éléments, la jupe de renfort comprend des moyens de serrage de la jupe de renfort autour du canal, par exemple une pluralité d'ergots d'encliquetage faisant saillie à partir d'une surface interne de la jupe de renfort.

Afin d'améliorer le maintien du dispositif dans l'orifice pratiqué dans la cloison, et ainsi conserver de bonnes propriétés d'isolation phonique, il comprend en outre un collet de maintien, par exemple de forme générale annulaire, enserrant la surface latérale externe de la deuxième partie du corps et destiné à coopérer un bord de la cloison. En outre, le collet de maintien participe à la rigidification du dispositif.

Pour favoriser la solidarisation entre la rondelle mécano-acoustique et la bague, et donc le maintien du dispositif dans la cloison, le collet de maintien comprend un rebord périphérique destiné à coopérer avec la cloison.

Afin d'améliorer encore davantage le maintien du collet de maintien dans l'orifice pratiqué dans la cloison, le collet de maintien comprend des pattes d'encliquetage faisant saillie à partir d'une surface externe du collet de maintien, destinées à coopérer avec un bord de la cloison délimitant l'orifice.

Pour favoriser la solidarisation entre la rondelle mécano-acoustique et la bague, et donc le maintien du dispositif dans la cloison, le collet de maintien comprend des taquets de support faisant saillie de manière radiale à partir d'une surface interne du collet de maintien, coopérant avec la surface latérale externe de la deuxième partie du corps, de préférence avec des saillies radiales de la surface latérale externe.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue en perspective d'un dispositif acoustique de traversée de cloison selon un premier mode de réalisation de l'invention ;
[Fig. 2] la figure 2 est une vue en coupe selon le plan II-II du dispositif acoustique de traversée de cloison de la figure 1 monté dans une cloison d'un véhicule automobile ;
[Fig. 3] la figure 3 est une vue en perspective d'une bague de traversée de cloison du dispositif acoustique de traversée de cloison de la figure 1 ;
[Fig. 4] la figure 4 est une vue en perspective d'une rondelle mécano-acoustique du dispositif acoustique de traversée de cloison de la figure 1 ;
[Fig. 5] la figure 5 est une vue en perspective éclatée d'une rondelle mécano-acoustique du dispositif acoustique de traversée de cloison de la figure 4 ;
[Fig. 6] la figure 6 est une vue en perspective du dispositif acoustique de traversée de cloison de la figure 1 selon un autre angle de vue ;
[Fig. 7] la figure 7 est une vue en perspective d'un collet de maintien du dispositif acoustique de traversée de cloison de la figure 1.
[Fig. 8] la figure 8 est une vue similaire à la figure 4 d'une rondelle mécano-acoustique selon un deuxième mode de réalisation de l'invention.

### Description détaillée

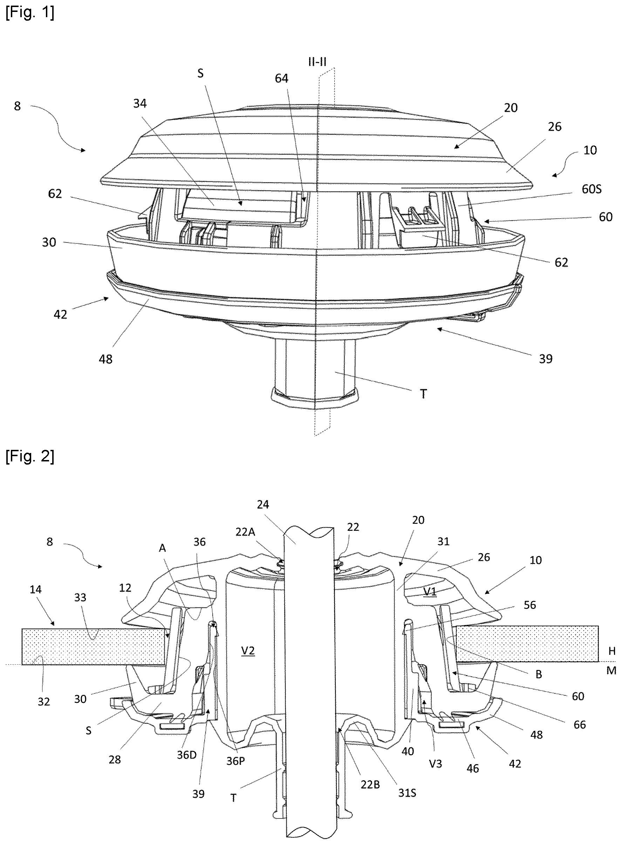

On a représenté à la figure 1 un dispositif acoustique 8 de traversée de cloison destiné à être monté dans un orifice 12 aménagé dans une cloison 14 d'un véhicule automobile séparant un compartiment moteur M du véhicule d'un habitacle H du véhicule, comme on peut le voir à la figure 2.

La cloison 14 peut par exemple être composée de plusieurs couches (non représentées), telle une couche de tôle une couche de matériau d'isolation phonique, par exemple de la mousse, pouvant être disposée sur la tôle du côté de l'habitacle H.

Le dispositif acoustique 8 de traversée de cloison comprend une bague 10 de traversée de cloison comportant un corps 20 de forme générale de révolution.

Comme on peut le voir à la figure 2, le corps 20 de la bague 10 comprend un canal 22 traversant axialement le corps 20 pour l'insertion d'un faisceau 24 de conducteurs qui traverse la cloison 14. Le corps 20 est par exemple réalisé en caoutchouc ou en élastomère, mais d'autres matériaux peuvent être envisagés. De préférence, le corps 20 est réalisé entièrement en matériau élastiquement déformable.

Le corps 20 comprend une première partie axiale formant une lèvre élastiquement déformable, dite lèvre acoustique 26, et une deuxième partie 28 du corps 20 portant des moyens d'appui 30 coopérant avec la cloison 14.

La deuxième partie 28 du corps 20 est délimitée par une surface latérale externe S jointive avec une surface axiale A de la deuxième partie 28 du corps 20 qui est en regard de la lèvre acoustique 26

Ici, le canal 22 relie une première ouverture 22A pratiquée dans la lèvre acoustique 26 à une deuxième ouverture 22B pratiquée dans la deuxième partie 28 du corps 20.

La lèvre acoustique 26 (première partie du corps 20) et la deuxième partie 28 du corps 20 sont ici reliées par une partie tubulaire 31 délimitant le canal 22.

Dans le mode de réalisation illustré sur les figures, la partie tubulaire 31 est sensiblement cylindrique de révolution. Dans une variante non représentée, la section transversale de la partie tubulaire 31 pourra varier le long de son axe longitudinal, par exemple en ayant une section localement d'un diamètre plus important entre la première 22A et la deuxième ouverture 22B. En particulier, il est possible, afin d'augmenter le volume V1, de réduire la section transversale de la partie tubulaire 31 à proximité de la première ouverture 22A.

Plus précisément, comme on peut le voir à la figure 2, la deuxième ouverture 22B est pratiquée dans une paroi de la partie tubulaire 31 formant un soufflet 31S déformable. Le soufflet 31S est notamment constitué d'un prolongement de la paroi de la partie tubulaire 31, s'étendant de façon radiale par rapport à la partie tubulaire 31 vers le canal 22.

Comme on peut le voir à la figure 2, le soufflet comprend ici deux plis, de sorte que la section du soufflet 31S forme un S renversé. Naturellement, dans des variantes, le soufflet 31S pourra comporter davantage de plis.

Le soufflet 31S permet notamment de faciliter la déformation radiale de la deuxième partie 28 du corps 20 de la bague et ainsi accompagner les déplacements du faisceau 24, afin de réduire les contraintes mécaniques sur la deuxième partie 28 du corps 20. Dans l'exemple représenté sur les figures le canal 22 est prolongé par un tube T formant un prolongement du soufflet 31S. Le tube T permet d'assurer un serrage autour du faisceau 24, et ainsi obtenir une étanchéité à l'eau et aux bruits. Le tube T permet également de servir d'assurer un renfort mécanique et éventuellement de servir de support à des moyens de serrage complémentaires tels que du ruban adhésif et/ou collier de serrage. Le tube T a pour section la section de la deuxième ouverture 22B. Pour faciliter le maintien du faisceau 24 dans le canal 22, la paroi interne du tube T est annelée.

Le corps 20 est fixé sur la cloison 14 par pincement du bord B de la cloison 14 délimitant l'orifice 12 entre la lèvre acoustique 26 et les moyens d'appui 30.

A cet effet, les moyens d'appui 30 coopèrent avec la surface externe 32 de la cloison 14 se trouvant du côté du compartiment moteur M et la lèvre acoustique 26 coopère avec la surface externe 33 de la cloison se trouvant du côté de l'habitacle H.

On notera qu'il est également possible de monter le dispositif acoustique 8 de traversée de cloison dans l'orifice 12 dans le sens opposé par rapport à la cloison 14, c'est-à-dire de sorte que les moyens d'appuis 30 coopèrent avec la surface externe 33 de la cloison 14 se trouvant du côté de l'habitacle H et la lèvre acoustique 26 coopère avec la surface externe 33 de la cloison se trouvant du côté du compartiment moteur M. Bien entendu on tiendra compte de la nature des surfaces externe 32, 33 (tôle, mousse, etc.) et du sens de montage requis par le constructeur automobile.

Les moyens d'appui 30 sont ici formés par une lèvre d'appui 30 radiale portée par la deuxième partie 28 du corps. En particulier, la lèvre d'appui 30 fait saillie radialement à partir de la paroi de la partie tubulaire 31.

La lèvre permet d'épouser la forme de la cloison 14 pour assurer une bonne étanchéité entre l'habitacle H et le compartiment moteur M. Plus précisément, dans le mode de réalisation illustré sur les figures, et comme on peut le voir notamment à la figure 2, la lèvre d'appui 30 fait saillie à partir de la surface latérale externe S du corps.

De cette manière, un volume de logement V1 d'une masse d'isolation phonique est délimité entre cette surface axiale A et la lèvre acoustique 26.

La masse d'isolation phonique logée dans le volume de logement V1 peut être composée exclusivement d'air, comme dans le mode de réalisation de l'invention illustré aux figures.

Dans une variante, la masse d'isolation phonique comprend un matériau solide d'isolation phonique, comme du feutre ou de la mousse. Dans encore d'autres variantes, la masse d'isolation phonique pourra comprendre du mastic tel que du mastic d'étanchéité de type butyle, qui présente l'avantage de conférer une étanchéité à l'eau et au bruit, ou encore un matériau plastique surmoulé tel que du polyuréthane.

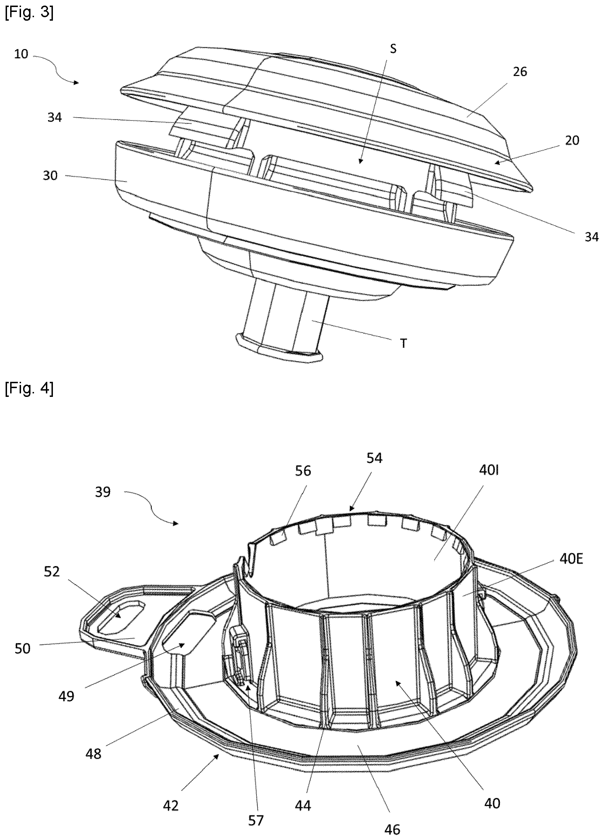

Comme on peut le voir à la figure 3, la surface latérale externe S, de forme générale annulaire, comprend des saillies radiales 34. Les saillies radiales 34 sont dans l'exemple représenté sur les figures au nombre de trois et réparties uniformément sur la circonférence de la surface latérale externe S (seules deux sont visibles à la figure 3) Leur nombre et leur répartition peut néanmoins varier. Les saillies radiales 34 comprennent une surface inférieure sensiblement plane orientée vers la deuxième partie 28 du corps, pour une raison expliquée plus loin.

La section de la partie tubulaire 31 est ici supérieure aux dimensions de celles de la première 22A et de la deuxième ouverture 22B de sorte que la partie tubulaire 31 délimite un deuxième volume de logement V2 d'une masse d'isolation phonique. Dans le mode de réalisation de l'invention illustré aux figures, le volume de logement V2 est composée exclusivement d'air.

Dans une variante, la masse d'isolation phonique comprend un matériau solide d'isolation phonique, comme du feutre, de la mousse. Dans encore d'autres variantes, la masse d'isolation phonique pourra comprendre du mastic tel que du mastic d'étanchéité de type butyle, qui présente l'avantage de conférer une étanchéité à l'eau et au bruit, ou encore un matériau plastique surmoulé tel que du polyuréthane.

La deuxième partie 28 du corps 20 comprend en outre une gorge d'ancrage 36 entourant le canal 22.

La gorge d'ancrage 36 délimitée par première paroi 36P et une deuxième paroi 36D, qui sont ici concentriques. Dans le mode de réalisation illustré sur les figures, la première paroi 36P est un prolongement de la partie tubulaire 31. De ce fait, la gorge d'ancrage 36 est de forme annulaire.

Le dispositif acoustique 8 de traversée de cloison comprend en outre une rondelle mécano-acoustique 39 insérée dans la gorge d'ancrage 36 comprenant une jupe de renfort 40 enserrant la première paroi 36P et une collerette acoustique 42 venant fermer la gorge d'ancrage 36.

La gorge d'ancrage 36 ainsi fermée par la rondelle mécano-acoustique 39 permet de constituer un volume de logement V3 d'une masse d'isolant phonique entre le corps 20 et la rondelle mécano-acoustique 39, ce qui améliore encore davantage les performances d'isolation phonique du dispositif acoustique 8 de traversée de cloison. Plus précisément, le volume V3 est ici délimité par la deuxième 36D paroi de la gorge, la jupe de renfort 40 et la collerette acoustique 42.

Comme pour les volumes de logement V1 et V2, le volume de logement V3 d'une masse d'isolant phonique est ici rempli exclusivement d'air, mais dans d'autres variantes, la masse d'isolation phonique pourra comprendre du mastic tel que du mastic d'étanchéité de type butyle, qui présente l'avantage de conférer une étanchéité à l'eau et au bruit, ou encore un matériau plastique surmoulé tel que du polyuréthane.

Dans l'exemple représenté sur les figures, la jupe de renfort 40 est cylindrique de révolution. Ceci permet notamment d'épouser la forme de la partie tubulaire 31.

Par ailleurs, comme on peut le voir à la figure 4, la jupe de renfort 40 comprend une pluralité de nervures de renfort 44. Les nervures de renfort 44 font saillie à partir de la surface externe 40E de la jupe de renfort, ici localement de façon normale par rapport à la surface externe 40E. Le nombre de nervures de renfort 44 est adapté selon les dimensions de la jupe de renfort 44. Elles peuvent par exemple être réparties de façon uniforme sur la surface externe 40E de la jupe de renfort.

De ce fait, le volume V3 est ici plus précisément délimité par la deuxième paroi 36D de la gorge, la surface externe 40E de la jupe de renfort, les nervures de renfort 44 et la collerette acoustique 42.

Sur l'exemple représenté à la figure 4, les nervures de renfort 44 sont toutes identiques, mais leurs dimensions et forme peuvent différer de l'une à l'autre. Ici, les nervures de renfort 44 sont sensiblement planes et ont une forme d'équerre dont la base fait saillie à partir de la collerette acoustique 42 et dont le sommet rejoint la surface externe 40E de la jupe de renfort. Dans le cas particulier représenté à la figure 4, les nervures de renfort 44 s'étendent sur une portion seulement de la hauteur de la jupe de renfort 40, ici environ jusque mi-hauteur de la jupe de renfort 40.

La forme des nervures de renfort 44 représentée à la figure 4 peut naturellement varier. On pourra par exemple prévoir des nervures de renfort 44 de section rectangulaire et constante sur toute la hauteur de la jupe de renfort 44.

La collerette acoustique 42 comprend une section annulaire 46 sensiblement plane. Afin de mieux renforcer la bague 10, la collerette acoustique 42 épouse au moins partiellement la lèvre d'appui 30. Pour cela, la section annulaire 46 qui s'évase pour former une bordure 48 qui épouse au moins partiellement la lèvre d'appui 30.

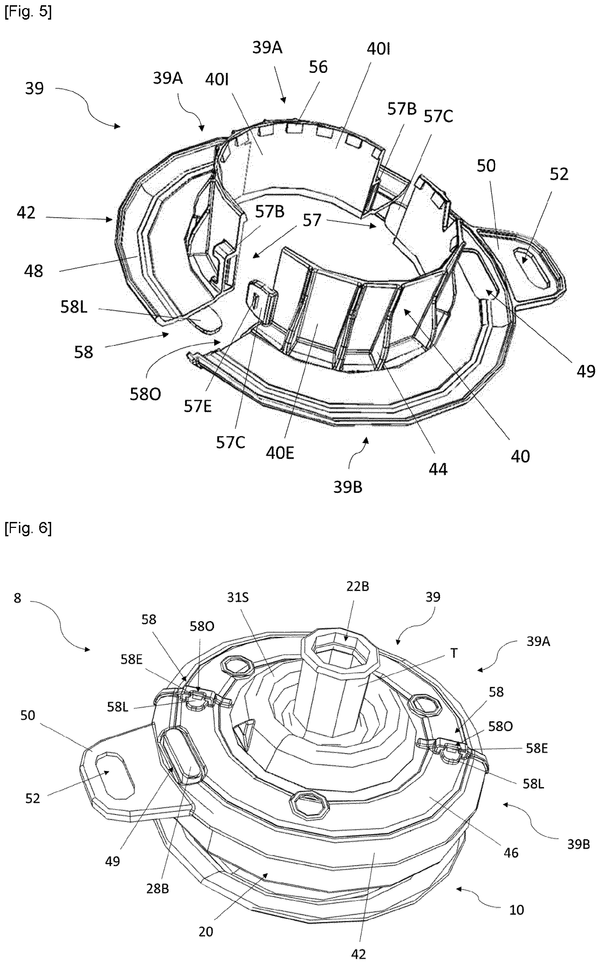

La bordure 48 comprend en outre une ouverture traversante 49 de forme oblongue. Comme on peut le voir à la figure 6, cette ouverture traversante 49 permet de loger un bossage 28B faisant saillie à partir de la deuxième partie 28 du corps de la bague 10. L'insertion du bossage 28B dans l'ouverture traversante 49 permet d'empêcher la rotation de la rondelle mécano-acoustique 39 par rapport à la bague 10. La bordure 48 comprend également une oreille 50 munie également d'une ouverture traversante 52 de forme oblongue. L'ouverture traversante 52 permet de loger un goujon (non représenté) soudé sur le véhicule (non représenté), d'empêcher la rotation du dispositif acoustique 8 de traversée de cloison par rapport au véhicule.

La jupe de renfort 40 comprend en outre des moyens de serrage 54 de la jupe de renfort 40 autour du canal 22, en l'occurrence sur la première paroi 36P de la deuxième partie 28 du corps de la bague. Il s'agit par exemple d'une pluralité d'ergots d'encliquetage 56, élastiquement déformables, faisant saillie à partir d'une surface interne 40I de la jupe de renfort. Les ergots d'encliquetage 56 sont par exemple répartis uniformément sur la circonférence de la surface interne 40I. Leur nombre et leurs dimensions peuvent varier.

Comme on peut le voir à la figure 5, la rondelle mécano-acoustique 39 est ici réalisée en deux parties 39A, 39B assemblées par des moyens d'assemblage 57. Dans une variante non représentée, elle peut être réalisée monobloc.

Dans l'exemple représenté sur les figures, les deux parties 39A, 39B sont séparées par un plan passant par le centre de la jupe de renfort 40 et de la collerette acoustique 42. Chacune des parties 39A, 39B comprend donc une partie de la jupe de renfort 40 de forme sensiblement semi-cylindrique et une partie de la collerette acoustique 42 de forme sensiblement semi-circulaire.

En l'occurrence, l'ouverture traversante 49 et l'oreille 50 sont portées par la partie 39B. On pourra cependant prévoir que l'ouverture traversante 49 et l'oreille 50 soient portées par la partie 39A, ou encore qu'elles soient portées chacune par une partie 59A, 59B différente.

De préférence, les moyens d'assemblage des deux parties 39A, 39B sont des moyens d'encliquetage 57. A cet effet, comme on peut le voir à la figure 5, la partie 39A porte un clip 57C et la partie 39B porte une boucle 57B, venant s'insérer dans la boucle 57C pour relier les deux parties 39A, 39B. Le clip 57C est de préférence ici muni d'un ergot élastique 57E dont la déformation au passage de la boucle 57C lors de l'insertion permet de verrouiller le clip 57C dans la boucle 57C et donc l'assemblage des deux parties 39A, 39B.

Dans le mode de réalisation illustré sur les figures, et comme on peut le voir à la figure 5, les moyens d'encliquetage 57 sont doublés, c'est-à-dire que chaque partie 39A, 39B comprend respectivement deux clips 57C et deux boucles 57C.

Il est également possible de prévoir des moyens d'assemblage secondaires 58 portés par la collerette acoustique 42 afin d'améliorer la solidarisation de la partie 39A à la partie 39B.

Dans l'exemple représenté sur les figures 5 et 6 notamment, les moyens d'assemblage secondaires 58 sont composés d'une languette 58L, par exemple portée par la partie 39A, faisant saillie à partir de la tranche de la collerette acoustique 42 de la partie 39A, qui est insérée dans une ouverture 58O correspondante pratiquée dans la tranche de la collerette acoustique 42 de la partie 39B. Comme on peut le voir à la figure 6, de préférence, la languette 58L est ici munie d'un ergot élastique 58E dont la déformation au passage de l'ouverture 58O lors de l'insertion permet de verrouiller la languette 58L dans l'ouverture 59O et donc améliorer la solidarisation des deux parties 39A, 39B.

Dans le mode de réalisation illustré sur les figures, les moyens d'assemblage secondaires 58 sont doublés, c'est-à-dire que chaque partie 39A, 39B comprend respectivement deux clips languettes 58L et deux ouvertures 58O. Le dispositif acoustique 8 de traversée de cloison comprend en outre un collet de maintien 60, enserrant la surface latérale externe S de la deuxième partie 28 du corps 20 de la bague 10.

Le collet de maintien 60 est ici de forme générale annulaire, afin de mieux épouser la forme de surface latérale externe S de la deuxième partie 28 du corps 20 de la bague 10, et en particulier de la lèvre d'appui 30.

Le collet de maintien 60 coopère avec le bord B de la cloison délimitant l'orifice 12. Il permet ainsi de garantir le positionnement et le maintien de la bague 10 dans l'orifice 12.

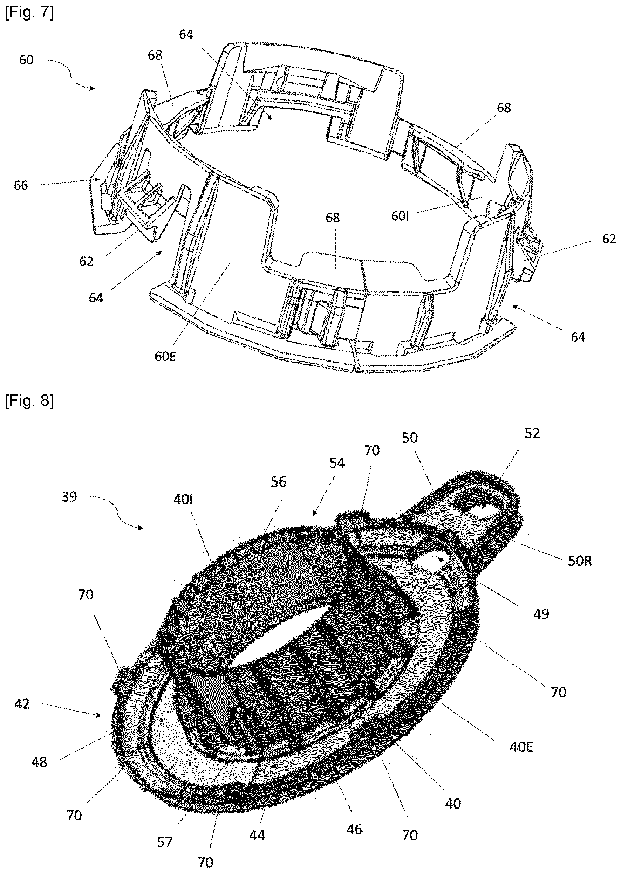

A cet effet, comme on peut le voir sur la figure 7, le collet de maintien 60 comprend des pattes d'encliquetage 62 faisant saillie à partir d'une surface externe 60E du collet de maintien. Les pattes d'encliquetage 62, élastiquement déformables, coopèrent avec le bord B de la cloison délimitant l'orifice 12.

Dans l'exemple représenté sur la figure 7, les pattes d'encliquetage 62 sont réalisées dans des fenêtres 64 pratiquées dans la paroi du collet de maintien 60. Ces fenêtres 64 et les pattes d'encliquetage 62 sont ici réparties uniformément sur la circonférence du collet de maintien 60 et au nombre de trois. Cette répartition ainsi que ce nombre peuvent néanmoins varier.

Par ailleurs, le collet de maintien 60 comprend un rebord périphérique 66 coopérant avec la cloison 14, ici avec la surface externe 32 de la cloison. En l'occurrence, du fait de la présence des fenêtres 64, le rebord périphérique 66 est interrompu à trois reprises et formé par la réunion de trois sections d'arc. On peut toutefois envisager, dans une variante, un rebord périphérique 66 annulaire, non interrompu sur la circonférence du collet de maintien 60.

Le collet de maintien 60 est également muni de taquets de support 68 faisant saillie, de manière radiale, à partir d'une surface interne 60I du collet de maintien. Les taquets de support 68 coopèrent avec les saillies radiales 34 de la surface latérale extérieure S de la deuxième partie 28 du corps de la bague. Plus précisément, les saillies radiales 34 reposent sur les taquets de support 68, en particulier avec la surface inférieure plane des saillies radiales 34, les taquets de support 68 présentant une surface supérieure plane.

Le nombre et la position des taquets de support 68 est adapté au nombre de saillies radiales 34 et vice-versa. Ainsi, dans l'exemple représenté sur les figures, le collet de maintien 60 est pourvu de trois taquets de support 68 répartis uniformément sur la circonférence du collet de maintien 60.

Selon un deuxième mode de réalisation illustré à la figure 8, la collerette acoustique 42 de la rondelle mécano-acoustique 39 comprend une ou plusieurs nervures de mantien 70 de manière à améliorer le mantien de la lèvre 30 sur la cloison 14. La ou les nervures de maintien 70 font saillie à partir de la bordure 48 de la colllerette acoustique 42 en direction de la lèvre 30, par exemple de manière sensiblement perpendiculaire au plan dans lequel s'étend la section annulaire 46. De préférence ces nervures de maintien 70 sont réparties uniformément sur le pourtour de la collerette acoustique 42. Dans l'exemple représenté à la figure 8, les nervures de maintien 70 sont au nombre de huit (seules six sont visibles sur la figure, les deux autres étant dissimulées derrière la jupe de renfort 40).

Par ailleurs, dans ce deuxième mode de réalisation, l'oreille 50 de la bordure 48 de la collerette acoustique 42 est munie sur une partie de son pourtour d'un rebord 50R faisant saillie à partir d'une de ses faces, ici à partir de la face opposée à la jupe de renfort 40. Le rebord 50R s'étend de préférence de manière perpendiculaire à la face de l'oreille 50 dans une direction opposée à celle de la jupe de renfort 40. Le rebord 50R permet d'aider à l'orientation de la rondelle mécano-acoustique 39 en coopérant avec une partie correspondante de la cloison 14.

Dans des variantes non représentées, la rondelle mécano-acoustique 39 pourra comprendre une ou plusieurs nervures de maintien 70 tandis que l'oreille 50 ne comprendra pas de rebord 50R et vice-versa.

L'invention n'est pas limitée aux modes de réalisation présentés et d'autres modes de réalisation apparaîtront clairement à l'homme du métier. Il est notamment possible que le dispositif acoustique de traversée de cloison soit muni de la bague et de la rondelle mécano-acoustique sans collet de maintien.

### Liste de références

8 :Dispositif acoustique de traversée de cloison
10 : Bague de traversée de cloison
12 : Orifice de cloison
14 : Cloison de véhicule automobile
20 : Corps de la bague
22 : Canal du corps
22A : Première ouverture du canal
22B : Deuxième ouverture du canal
24 : Faisceau de conducteurs
26 : Première partie (lèvre acoustique) du corps de la bague
28 : Deuxième partie du corps de la bague
28B : Bossage de la deuxième partie
30 : Moyens d'appui du corps de la bague
31 : Partie tubulaire du corps de la bague
31S : Soufflet déformable
32 : Surface externe de la cloison
33 : Surface interne de la cloison
34 : Saillies radiales de la surface latérale externe du corps
36 : Gorge d'ancrage du corps de la bague
36D : Deuxième paroi de la gorge d'ancrage
36P : Première paroi de la gorge d'ancrage
39 : Rondelle mécano-acoustique
39A : Première partie de la rondelle mécano-acoustique
39B : Deuxième partie de la rondelle mécano-acoustique
40 : Jupe de renfort
40E : Surface externe de la jupe de renfort
40I : Surface interne de la jupe de renfort
42 : Collerette acoustique
44 : Nervures de renfort
46 : Section annulaire de la collerette
48 : Bordure de la collerette
49 : Ouverture de la bordure
50 : Oreille de la collerette
50R : Rebord de l'oreille
52 : Ouverture de l'oreille
54 : Moyens de serrage de la jupe de renfort
56 : Ergots d'encliquetage de la jupe de renfort
57 : Moyens d'assemblage des parties de la rondelle mécano-acoustique
57B : Boucle des moyens d'assemblage
57C : Clip des moyens d'assemblage
57E : Ergot élastique des moyens d'assemblage
58 : Moyens d'assemblage secondaire des parties de la rondelle mécano-acoustique
58L : Languette des moyens d'assemblage secondaires
58O : Ouverture des moyens d'assemblage secondaires
58E : Ergot élastique des moyens d'assemblage secondaires
60 : Collet de maintien
60E : Surface externe du collet de maintien
60I : Surface interne Collet de maintien
62 : Pattes d'encliquetage du collet de maintien
64 : Fenêtres du collet de maintien
66 : Rebord périphérique du collet de maintien
68 : Taquets de support
70 : Nervures de maintien
A : Surface axiale du corps de la bague
B : Bord de la cloison délimitant l'orifice
H : Habitacle de véhicule
M : Compartiment moteur de véhicule
S : Surface latérale externe de la deuxième partie du corps
T : Tube
V1 : Premier volume de logement d'une masse d'isolation phonique
V2 : Deuxième volume de logement d'une masse d'isolation phonique
V3 : Troisième volume logement d'une masse d'isolation phonique

## Revendications

1. Dispositif acoustique (8) de traversée de cloison destinée à être montée dans un orifice (12) aménagé dans une cloison (14) d'un véhicule automobile séparant un compartiment moteur (M) du véhicule d'un habitacle (H) du véhicule, comprenant une bague (10) de traversée de cloison comportant un corps (20) comprenant :
- un canal (22) traversant le corps (20) pour l'insertion d'un faisceau (24) de conducteurs,
- une première partie formant une lèvre élastiquement déformable, dite lèvre acoustique (26), et
- une deuxième partie (28) portant des moyens d'appui (30) destinés à coopérer avec une surface (32) de la cloison,
le corps (20) se fixant sur la cloison (14) par pincement du bord (B) de la cloison (14) délimitant l'orifice (12) de la cloison entre la lèvre acoustique (26) et les moyens d'appui (30),
la deuxième partie (28) du corps étant délimitée par une surface latérale externe (S) jointive avec une surface axiale (A) de la deuxième partie (28) du corps qui est en regard de la lèvre acoustique (26), de façon à délimiter entre cette surface axiale (A) et cette lèvre acoustique (26) un premier volume de logement (V1) d'une masse d'isolation phonique,
**caractérisée en ce qu'il** comprend en outre une rondelle mécano-acoustique (39) comprenant :
- une jupe de renfort (40) insérée dans une gorge d'ancrage (36) ménagée dans la deuxième partie (28) en entourant le canal (22) et
- une collerette acoustique (42) fermant la gorge d'ancrage (36) et créant un volume de logement (V3) d'une masse d'isolation phonique entre le corps (20) et la rondelle mécano-acoustique (39).

2. Dispositif acoustique (8) de traversée de cloison selon la revendication 1, dans lequel la rondelle mécano-acoustique (39) est réalisée en deux parties (39A, 39B) assemblées par des moyens d'assemblage, par exemple des moyens d'encliquetage (57) portés par chacune les deux parties (39A,39B).

3. Dispositif acoustique (8) de traversée de cloison selon l'une quelconque des revendications précédentes, dans lequel les moyens d'appui (30) sont une lèvre d'appui radiale portée par la deuxième partie (28) du corps.

4. Dispositif acoustique (8) de traversée de cloison selon la revendication 3, dans lequel la collerette acoustique (42) épouse au moins partiellement la lèvre d'appui (30).

5. Dispositif acoustique (8) de traversée de cloison selon l'une quelconque des revendications précédentes, dans lequel la première partie (26) et la deuxième partie (28) du corps sont reliées par une partie tubulaire (31) délimitant le canal (22).

6. Dispositif acoustique (8) de traversée de cloison selon la revendication 5 dans lequel la gorge d'ancrage (36) est délimitée par une première paroi (36P) et une deuxième paroi (36D), la première paroi (36P) étant un prolongement de la partie tubulaire (31).

7. Dispositif acoustique (8) de traversée de cloison selon la revendication 5 ou 6, dans lequel le canal (22) relie une première ouverture (22A) pratiquée dans la lèvre acoustique (26) à une deuxième ouverture (22B) pratiquée dans la deuxième partie (28), la section de la partie tubulaire (31) étant supérieure à celles des première (22A) et deuxième (22B) ouvertures de sorte que la partie tubulaire (31) délimite un deuxième volume de logement (V2) d'une masse d'isolation phonique.

8. Dispositif acoustique (8) de traversée de cloison selon l'une quelconque des revendications 5 à 7, dans lequel le canal (22) relie une première ouverture (22A) pratiquée dans la lèvre acoustique (26) à une deuxième ouverture (22B) pratiquée dans la deuxième partie (28), la deuxième ouverture (22B) étant pratiquée dans une paroi de la partie tubulaire (31) formant un soufflet déformable (31S).

9. Dispositif acoustique (8) de traversée de cloison selon l'une quelconque des revendications précédentes, dans lequel la jupe de renfort (40) est cylindrique de révolution.

10. Dispositif acoustique (8) de traversée de cloison selon l'une quelconque des revendications précédentes, dans lequel la jupe de renfort (40) comprend une pluralité de nervures de renfort (44), les nervures de renfort (44) faisant de préférence saillie à partir d'une surface externe (40E) de la jupe de renfort, par exemple localement de façon normale par rapport à la surface externe (40E).

11. Dispositif acoustique (8) de traversée de cloison selon l'une quelconque des revendications précédentes, dans lequel la jupe de renfort (40) comprend des moyens de serrage (54) de la jupe de renfort (40) autour du canal (22), par exemple une pluralité d'ergots d'encliquetage (56) faisant saillie à partir d'une surface interne (40E) de la jupe de renfort.

12. Dispositif acoustique (8) de traversée de cloison selon l'une quelconque des revendications précédentes, comprenant en outre un collet de maintien (60), par exemple de forme générale annulaire, enserrant la surface latérale externe (S) de la deuxième partie (28) du corps et destiné à coopérer un bord de la cloison (14).

13. Dispositif acoustique (8) de traversée de cloison selon la revendication 12, dans lequel le collet de maintien (60) comprend un rebord périphérique (66) destiné à coopérer avec cloison (14).

14. Dispositif acoustique (8) de traversée de cloison selon la revendication 12 ou 13, dans lequel le collet de maintien (60) comprend des pattes d'encliquetage (62) faisant saillie à partir d'une surface externe (60E) du collet de maintien, destinées à coopérer avec un bord de la cloison (14) délimitant l'orifice (12).

15. Dispositif acoustique (8) de traversée de cloison selon l'une quelconque des revendications 12 à 14, dans lequel le collet de maintien (60) comprend des taquets de support (68) faisant saillie de manière radiale à partir d'une surface interne (60I) du collet de maintien, coopérant avec la surface latérale externe (S) de la deuxième partie (28) du corps, de préférence avec des saillies radiales (34) de la surface latérale externe (S).

## Patentansprüche

1. Akustische Trennwanddurchführungsvorrichtung (8), die dazu bestimmt ist, in einer Öffnung (12) montiert zu werden, die in einer Trennwand (14) eines Kraftfahrzeugs ausgebildet ist, die einen Motorraum (M) des Fahrzeugs von einem Fahrgastraum (H) des Fahrzeugs trennt, umfassend einen Ring (10) zur Trennwanddurchführung, der einen Körper (20) aufweist, der umfasst
- einen Kanal (22), der den Körper (20) durchquert, um ein Bündel (24) von Leitern einzuführen,
- einen ersten Teil, der eine elastisch verformbare Lippe, die sogenannte akustische Lippe (26), bildet, und
- ein zweiter Teil (28), der Stützmittel (30) trägt, die dazu bestimmt sind, mit einer Oberfläche (32) der Trennwand zusammenzuwirken,
wobei der Körper (20) an der Trennwand (14) befestigt wird, indem der Rand (B) der Trennwand (14), der die Öffnung (12) der Trennwand begrenzt, zwischen der akustischen Lippe (26) und den Stützmitteln (30) eingeklemmt wird,
wobei der zweite Teil (28) des Körpers durch eine äußere Seitenfläche (S) begrenzt ist, die an eine axiale Fläche (A) des zweiten Teils (28) des Körpers anschließt, die der akustischen Lippe (26) gegenüberliegt, so dass zwischen dieser axialen Fläche (A) und dieser akustischen Lippe (26) ein erstes Aufnahmevolumen (V1) einer schallisolierenden Masse begrenzt wird,
**dadurch gekennzeichnet, dass sie** weiterhin eine mechanisch-akustische Unterlegscheibe (39) umfasst, umfassend :
- eine Verstärkungsschürze (40), die in eine Verankerungsnut (36) eingesetzt ist, die im zweiten Teil (28) ausgebildet ist und den Kanal (22) umgibt,
und
- einen akustischen Kragen (42), der die Verankerungsnut (36) schließt und ein Aufnahmevolumen (V3) für eine schallisolierende Masse zwischen dem Körper (20) und der mechanisch-akustischen Unterlegscheibe (39) schafft.

2. Akustische Trennwanddurchführungsvorrichtung (8) nach Anspruch 1, bei der die mechanisch-akustische Unterlegscheibe (39) durch zwei Teile (39A, 39B) realisiert ist, die durch Montagemittel, z. B. Einrastmittel (57), die von jedem der beiden Teile (39A, 39B) getragen werden, zusammengefügt werden.

3. Akustische Trennwanddurchführungsvorrichtung (8) nach einem der vorstehenden Ansprüche, wobei die Stützmittel (30) eine radiale Stützlippe sind, die von dem zweiten Teil (28) des Körpers getragen wird.

4. Akustische Trennwanddurchführungsvorrichtung (8) nach Anspruch 3, wobei sich der akustische Kragen (42) zumindest teilweise an die Stützlippe (30) anpasst.

5. Akustische Trennwanddurchführungsvorrichtung (8) nach einem der vorstehenden Ansprüche, wobei der erste Teil (26) und der zweite Teil (28) des Körpers durch einen rohrförmigen Teil (31) verbunden sind, der den Kanal (22) begrenzt.

6. Akustische Trennwanddurchführungsvorrichtung (8) nach Anspruch 5, bei der die Verankerungsnut (36) von einer ersten Wand (36P) und einer zweiten Wand (36D) begrenzt wird, wobei die erste Wand (36P) eine Verlängerung des rohrförmigen Teils (31) ist.

7. Akustische Trennwanddurchführungsvorrichtung (8) nach Anspruch 5 oder 6, wobei der Kanal (22) eine erste Öffnung (22A), die in der akustischen Lippe (26) ausgebildet ist, mit einer zweiten Öffnung (22B) verbindet, die in dem zweiten Teil (28) ausgebildet ist, wobei der Querschnitt des rohrförmigen Teils (31) größer ist als der der ersten (22A) und zweiten (22B) Öffnung, so dass der rohrförmige Teil (31) ein zweites Aufnahmevolumen (V2) für eine schallisolierende Masse begrenzt.

8. Akustische Trennwanddurchführungsvorrichtung (8) nach einem der Ansprüche 5 bis 7, wobei der Kanal (22) eine erste Öffnung (22A), die in der akustischen Lippe (26) ausgebildet ist, mit einer zweiten Öffnung (22B) verbindet, die in dem zweiten Teil (28) ausgebildet ist, wobei die zweite Öffnung (22B) in einer Wand des rohrförmigen Teils (31) ausgebildet ist, der einen verformbaren Balg (31S) bildet.

9. Akustische Trennwanddurchführungsvorrichtung (8) nach einem der vorstehenden Ansprüche, bei der die Verstärkungsschürze (40) rotationszylindrisch ist.

10. Akustische Trennwanddurchführungsvorrichtung (8) nach einem der vorstehenden Ansprüche, wobei die Verstärkungsschürze (40) eine Vielzahl von Verstärkungsrippen (44) umfasst, wobei die Verstärkungsrippen (44) vorzugsweise von einer Außenfläche (40E) der Verstärkungsschürze vorstehen, beispielsweise lokal normal zu der Außenfläche (40E).

11. Akustische Trennwanddurchführungsvorrichtung (8) nach einem der vorstehenden Ansprüche, wobei die Verstärkungsschürze (40) Mittel zum Festklemmen (54) der Verstärkungsschürze (40) um den Kanal (22) umfasst, beispielsweise eine Vielzahl von Rastnasen (56), die von einer Innenfläche (40E) der Verstärkungsschürze aus vorstehen.

12. Akustische Trennwanddurchführungsvorrichtung (8) nach einem der vorstehenden Ansprüche, die außerdem einen z. B. allgemein ringförmigen Haltekragen (60) umfasst, der die äußere Seitenfläche (S) des zweiten Teils (28) des Körpers umschließt und dazu bestimmt ist, mit einem Rand der Trennwand (14) zusammenzuwirken.

13. Akustische Trennwanddurchführungsvorrichtung (8) nach Anspruch 12, wobei der Haltekragen (60) einen Umfangsrand (66) aufweist, der dazu bestimmt ist, mit der Trennwand (14) zusammenzuwirken.

14. Akustische Trennwanddurchführungsvorrichtung (8) nach Anspruch 12 oder 13, bei der der Haltekragen (60) Rastnasen (62) umfasst, die von einer Außenfläche (60E) des Haltekragens vorstehen und dazu bestimmt sind, mit einem Rand der die Öffnung (12) begrenzenden Trennwand (14) zusammenzuwirken.

15. Akustische Trennwanddurchführungsvorrichtung (8) nach einem der Ansprüche 12 bis 14, wobei der Haltekragen (60) Stütznasen (68) umfasst, die radial von einer Innenfläche (601) des Haltekragens vorstehen und mit der äußeren Seitenfläche (S) des zweiten Teils (28) des Körpers zusammenwirken, vorzugsweise mit radialen Vorsprüngen (34) der äußeren Seitenfläche (S).

## Claims

1. Acoustic partition-traversing device (8), intended to be mounted in an opening (12), provided in a partition (14) of a motor vehicle, separating an engine compartment (M) of the vehicle from a passenger compartment (H) of the vehicle, comprising a partition-traversing ring (10) comprising a body (20) comprising:
- a channel (22) traversing the body (20) for insertion of a bundle (24) of conductors,
- a first part forming an elastically deformable lip, called an acoustic lip (26), and
- a second part (28) carrying support means (30) intended to cooperate with a surface (32) of the partition,
wherein the body (20) is fixed to the partition (14) by pinching the edge (B) of the partition (14) delimiting the opening (12) of the partition between the acoustic lip (26) and the support means (30),
wherein the second part (28) of the body is delimited by an external lateral surface (S) adjoining an axial surface (A) of the second part (28) of the body which is opposite the acoustic lip (26), so as to delimit a first housing volume (V1) of a sound insulation mass between this axial surface (A) and this acoustic lip (26),
**characterised in that** it further comprises a mechanical-acoustic washer (39) comprising:
- a reinforcing skirt (40) inserted in an anchoring groove (36) provided in the second part (28) surrounding the channel (22) and
- an acoustic collar (42) closing the anchoring groove (36) and creating a housing volume (V3) for a sound insulation mass between the body (20) and the mechanical-acoustic washer (39).

2. Acoustic partition-traversing device (8) according to claim 1, wherein the mechanical-acoustic washer (39) is made in two parts (39A, 39B), assembled by assembly means, for example snap-fastening means (57) carried by each of the two parts (39A, 39B).

3. Acoustic partition-traversing device (8) according to any one of the preceding claims, wherein the support means (30) are a radial support lip carried by the second part (28) of the body.

4. Acoustic partition-traversing device (8) according to claim 3, wherein the acoustic collar (42) at least partially matches the support lip (30).

5. Acoustic partition-traversing device (8) according to any one of the preceding claims, wherein the first part (26) and the second part (28) of the body are connected by a tubular part (31) delimiting the channel (22).

6. Acoustic partition-traversing device (8) according to claim 5, wherein the anchoring groove (36) is delimited by a first wall (36P) and a second wall (36D), wherein the first wall (36P) is an extension of the tubular part (31).

7. Acoustic partition-traversing device (8) according to claim 5 or 6, wherein the channel (22) connects a first opening (22A) made in the acoustic lip (26) to a second opening (22B) made in the second part (28), wherein the section of the tubular part (31) is larger than those of the first (22A) and second (22B) openings such that the tubular part (31) delimits a second housing volume (V2) of a sound insulation mass.

8. Acoustic partition-traversing device (8) according to any one of claims 5 to 7, wherein the channel (22) connects a first opening (22A) made in the acoustic lip (26) to a second opening (22B) made in the second part (28), wherein the second opening (22B) is made in a wall of the tubular part (31) forming a deformable bellows (31S).

9. Acoustic partition-traversing device (8) according to any one of the preceding claims, wherein the reinforcing skirt (40) is rotation-cylindrical.

10. Acoustic partition-traversing device (8) according to any one of the preceding claims, wherein the reinforcing skirt (40) comprises a plurality of reinforcing ribs (44), wherein the reinforcing ribs (44) preferably project from an external surface (40E) of the reinforcing skirt, for example locally normal to the external surface (40E).

11. Acoustic partition-traversing device (8) according to any one of the preceding claim, wherein the reinforcing skirt (40) comprises means for clamping (54) the reinforcing skirt (40) around the channel (22), for example a plurality of snap-fastening lugs (56), projecting from an internal surface (40E) of the reinforcing skirt.

12. Acoustic partition-traversing device (8) according to any one of the preceding claims, further comprising a retaining collar (60), for example with a generally annular shape, enclosing the external lateral surface (S) of the second part (28) of the body and intended to cooperate with an edge of the partition (14).

13. Acoustic partition-traversing device (8) according to claim 12, wherein the retaining collar (60) comprises a peripheral edge (66), intended to cooperate with the partition (14).

14. Acoustic partition-traversing device (8) according to claim 12 or 13, wherein the retaining collar (60) comprises snap-fastening tabs (62), projecting from an external surface (60E) of the retaining collar, intended to cooperate with an edge of the partition (14) delimiting the opening (12).

15. Acoustic partition-traversing device (8) according to any one of claims 12 to 14, wherein the retaining collar (60) comprises support lugs (68,) projecting radially from an internal surface (601) of the retaining collar, cooperating with the external lateral surface (S) of the second part (28) of the body, preferably with radial projections (34) of the external lateral surface (S).
